# EUROPÄISCHE PATENTSCHRIFT

(11) **EP 0 601 330 B1**
(45) Veröffentlichungstag und Bekanntmachung des Hinweises auf die Patenterteilung: **17.07.1996**
(21) Anmeldenummer: 93117679.6
(22) Anmeldetag: 02.11.1993
(51) Int. Cl.: F16F 15/12

(54) **Drehschwingungstilger**
Rotational vibration damper
Amortisseur d'oscillations rotatives

(30) Priorität: 02.12.1992 DE 4240510
(43) Veröffentlichungstag der Anmeldung: 15.06.1994
(73) Patentinhaber: CLOUTH GUMMIWERKE AG, D-50682 Köln (DE)
(72) Erfinder: Zimmermann, Dirk, D-84539 Ampfing (DE); Vorwald, Josef, D-34260 Kaufungen (DE)
(74) Vertreter: Schneider, Egon

(56) Entgegenhaltungen:
- EP-A- 0 066 040
- EP-A- 0 250 913
- EP-A- 0 403 725
- DE-A- 2 455 385
- DE-A- 3 902 769
- FR-A- 2 573 826
- PATENT ABSTRACTS OF JAPAN vol. 14, no. 281 (M-986)(4224) 27. März 1990 & JP-A-02 085 543 (TOYODA GOSEI CO LTD)

## Beschreibung

Die Erfindung bezieht sich auf einen Drehschwingungstilger, insbesondere für Kraftfahrzeuge, mit einem an eine Welle oder Scheibe anschließbaren Nabenring und mit einem dazu konzentrischen Schwungring, der über mindestens drei um gleiche Winkel versetzt anvulkanisierte Gummistege elastisch am Nabenring angekoppelt ist.

Drehschwingungstilger dieser Art sind bekannt aus der DE 35 35 803 C1 und der DE 37 16 588 A1. Bei diesen bekannten Drehschwingungstilgern besteht der Nabenring oder der Topf, an dem der Schwungring über anvulkanisierte Gummistege elastisch angekoppelt ist, aus tiefgezogenem Stahlblech. Die bekannten Nabenringe oder Töpfe leiten die Wärme der Welle, mit denen sie verbunden sind, weiter bis an die Gummistege, so daß sich die Charakteristik des Drehschwingungstilgers mit steigender Temperatur des Nabenringes ändert. Weil Gummi bei höheren Temperaturen, beispielsweise über 80°C, eine andere Elastizität aufweist als beispielsweise bei Raumtemperatur, können die bekannten Drehschwingungsdämpfer im allgemeinen nur dort eingesetzt werden, wo die Temperatur an der zu dämpfenden Welle nicht wesentlich größer ist als die Umgebungstemperatur. Aus diesen Gründen werden die bekannten Drehschwingungstilger an der Ausgangswelle des Getriebes angebracht.Diese Anordnung hat den Nachteil, daß der an der Getriebe-Ausgangswelle angekoppelte Drehschwingungstilger in Leerlaufstellung des Schaltgetriebes ohne Wirkung ist, so daß im Leerlauf Rasselgeräusche im Getriebe nicht verhindert werden.

Der Erfindung liegt die Aufgabe zugrunde, einen Drehschwingungstilger zu schaffen, der auch unter schwierigen Platzverhältnissen und bei einfacher Montage so angeordnet werden kann, daß auch im Leerlauf ein durch Drehschwingungen verursachtes Rasseln im Schaltgetriebe vermieden wird.

Diese Aufgabe wird erfindungsgemäß dadurch gelöst, daß der Nabenring oder der Teil des Nabenringes, an dem die Gummistege anvulkanisiert sind, aus einem kernmischen Werkstoff besteht.

Der hochtemperaturfeste keramische Werkstoff führt zu eine thermischen Entkopplung von Nabenring und Gummistegen.

Der Drehschwingungstilger nach der Erfindung hat den Vorteil, daß die Temperatur des Teils, an dem der Nabenring des Drehschwingungstilgers angeflanscht ist, nicht auf die anvulkanisierten Gummistege übertragen wird. Daraus ergibt sich eine geringere thermische Belastung des Gummis und die Möglichkeit, den Drehschwingungstilger am Schwungrad eines Kraftfahrzeugmotors anzubringen. Die in der Kurbelwelle erzeugten Drehschwingungen werden dann also schon vor Eintritt in das Getriebe zumindest teilweise getilgt, so daß die Getriebegeräusche reduziert sind.

Weitere Merkmale der Erfindung ergeben sich aus den Unteransprüchen.

In der folgenden Beschreibung werden bis auf das Merkmal, daß der Nabenring oder der Teil des Nebenringes, an dem die Gummistege anvulkanisiert sind, aus einem Keramischen Werstoff besteht, die Merkmale des Drehschwingungstilgers nach der Erfindung unter Bezugnahme auf die Zeichnungen näher erläutert. Die Zeichnungen zeigen in
- Fig. 1: eine Seitenansicht eines Drehschwingungstilgers nach der Erfindung,
- Fig. 2: eine Ansicht des Drehschwingungstilgers nach der Schnittlinie II-II in Fig. 1,
- Fig. 3: eine der Fig. 2 entsprechende Ansicht einer anderen Ausführungsform des Drehschwingungstilgers nach der Erfindung.

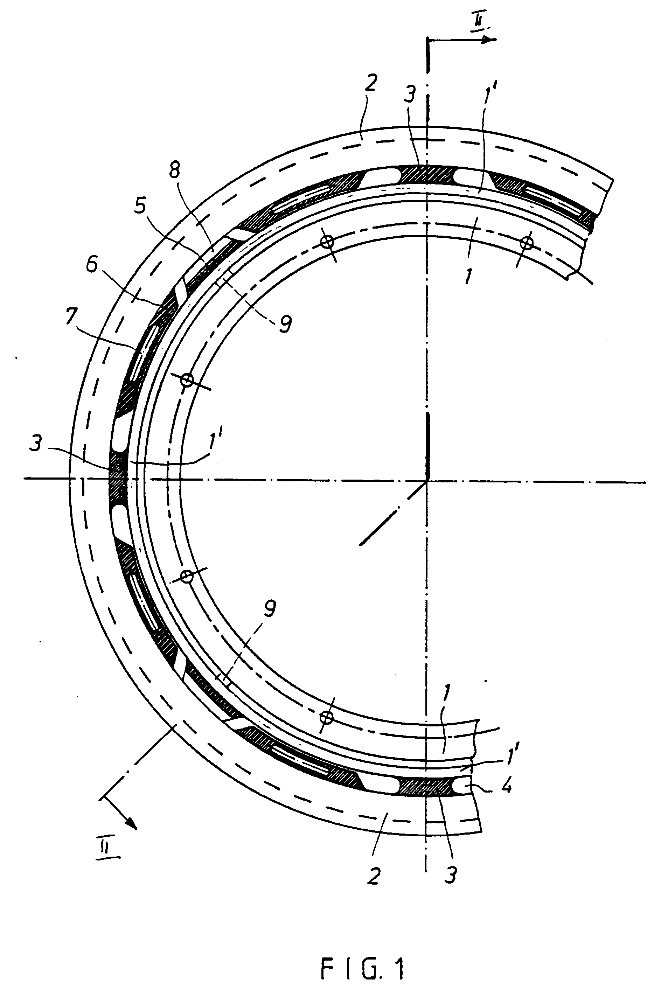

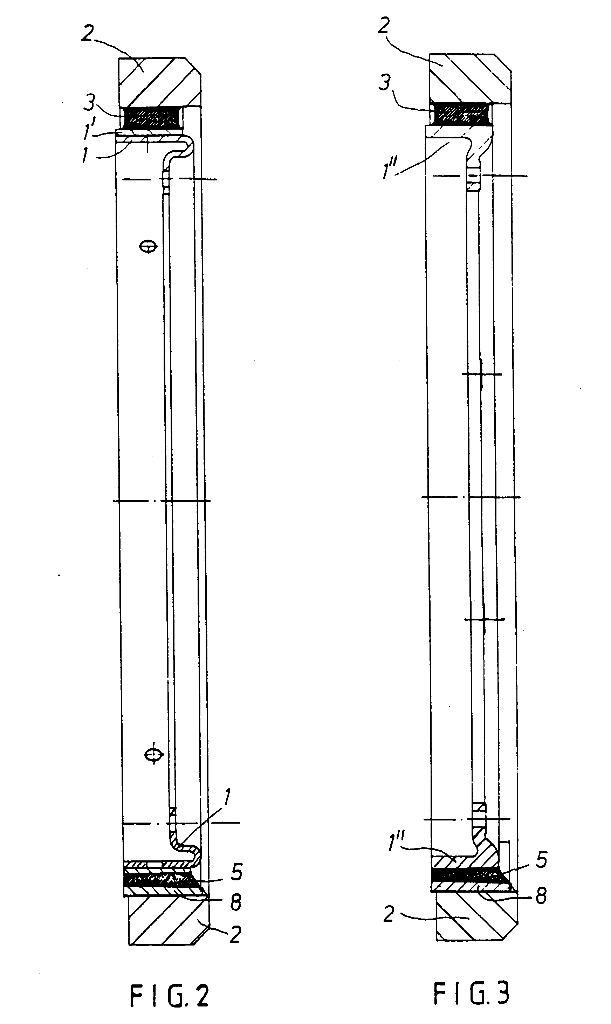

Der in Fig. 1 und 2 dargestellte Drehschwingungstilger besteht aus einem Nabenring 1, der an eine Scheibe, insbesondere an der Schwungscheibe eines Motors, anflanschbar ist und aus einem am Umfang des Nabenringes 1 über vier Gummistege 3 verbundenen Schwungring 2, der aufgrund seiner Masse und seiner elastischen Ankupplung gegenüber dem Nabenring 1, um die Drehachse bezogen auf eine 0-Stellung Pendelbewegungen ausführen kann, wodurch die im Bereich von 20 bis 100 Hertz liegenden Drehschwingungen reduziert oder getilgt werden. In dem Spalt 4 zwischen Nabenring 1 und Schwungring 2 sind vier Abstandhalter 5 angeordnet, die am Nabenring 1 befestigt sind und gegenüber dem Schwungring 2 einen möglichst kleinen Spalt freilassen. Dieser Restspalt sollte kleiner sein als 0,1 mm. Diese Abstandhalter sorgen dafür, daß der Schwungring 2 praktisch keine radialen Bewegungen ausführen kann.

Auf der Umfangsfläche des Nabenringes 1 ist ein wärmeisolierender Teil 1' aus Kunststoff, insbesondere Polyphenylensulfid aufgegossen oder aufgespritzt. Dieser wärmeisolierende Teil 1' ist fest mit dem Nabenring 1 verbunden. Auf diesen wärmeisolierenden Teil 1' sind die Gummistege 3 anvulkanisiert. Der wärmeisolierende Teil 1' des Nabenringes 1 ist zweckmäßigerweise über Nuten oder Ausnehmungen 9 im metallischen Nabenring 1 verankert. Die Abstandhalter 5 sind auf den ringförmigen wärmeisolierenden Teil 1' aufvulkanisiert und haben an dem dem Schwungring 2 benachbarten Bereich eine Schicht aus reibungsverminderndem Werkstoff, das heißt einem Werkstoff, der im Hinblick auf den Reibpartner einen niedrigen Reibungsbeiwert aufweist. Diese Schicht 8, die gleichzeitig auch wärmeisolierend sein kann, schützt den elastischen Gummikern des Abstandhalters 5 gegen zu hohe Temperaturen, die bei der Reibung des Schwungringes 2 auf den Abstandhaltern 5 erzeugt werden könnten.

Die Abstandhalter 5 arbeiten mit zusätzlichen Anschlägen 6 zusammen, die am Schwungring 2 anvulkanisiert sind. Neben jedem Abstandhalter 5 sind zwei Anschläge 6 angeordnet, so daß die Schwingungsausschläge des Schwungringes 2 um den Nabenring 1 durch diese Anschläge 6 begrenzt sind. Die Anschläge 6 sind ferner als zusätzliche Abstandhalter ausgebildet. Sie weisen eine Ausnehmung auf, in die ein flacher Paßkern einsetzbar ist. Mit Hilfe des Paßkernes 7 kann der Spalt zwischen der Innenfläche des Anschlages 6 und der Außenfläche des Nabenringes 1 bzw. des wärmeisolierenden Teiles 1' des Nabenringes eingestellt werden.

Bei der Ausführungsform nach den Fig. 1 und 2 umgibt der wärmeisolierende Teil 1' den Nabenring 1 aus Stahlblech. Es ist aber auch möglich, die wärmeisolierenden Teile 1' nur im Bereich der Gummistege 3 anzubringen, sofern diese wärmeisolierenden Teile zuverlässig mit dem Nabenring 1 verbunden sind.

Wie die Fig. 3 zeigt, kann aber auch der Nabenring 1'' aus einem hochtemperaturfesten und schlecht wärmeleitenden Kunststoff hergestellt sein. Dieser wärmeisolierende Nabenring 1'' kann insbesondere durch Glasfasern verstärkt sein.

Die Schicht 8 aus reibungsverminderndem Kunststoff auf den Abstandhaltern 5 kann zusammen mit dem wärmeisolierenden Teil 1' des Nabenringes an den Nabenring angespritzt oder angegossen werden. Dabei entstehen an einer Seite des Drehschwingungstilgers verbindende Teile, welche den Raum zum Einvulkanisieren des Gummiteils der Abstandhalter 5 umgreifen und die Schichten 8 mit dem wärmeisolierenden Teil 1' des Nabenringes 1 verbinden. Diese verbindenden Teile werden nach Fertigstellung des Drehschwingungstilgers abgetrennt. Hierdurch wird eine akustische Entkopplung erreicht, die ein Auftreten von Geräuschen bei evtl. Radialschwingungen ausschließt.

Die Schicht 8 auf den Abstandhaltern 5 kann auch zusammen mit dem Nabenring 1" gespritzt oder gegossen werden und nach dem Entformen die verbindenden Teile abgetrennt werden.

## Patentansprüche

1. Drehschwingungstilger, insbesondere für Kraftfahrzeuge, mit einem an eine Welle oder Scheibe anschließbaren Nabenring und mit einem dazu konzentrischen Schwungring, der über mindestens drei um gleiche Winkel versetzt anvulkanisierte Gummistege elastisch am Nabenring angekoppelt ist, **dadurch gekennzeichnet**, daß der Nabenring (1") oder der Teil (1') des Nabenringes (1), an dem die Gummistege (3) anvulkanisiert sind, aus einem keramischen Werkstoff besteht.

2. Drehschwingungstilger nach Anspruch 1, dadurch gekennzeichnet, daß auf dem Nabenring (1, 1', 1") elastische Abstandhalter (5) angebracht sind, die zumindest an der Reibungsfläche aus Werkstoff mit niedrigem Reibungsbeiwert, z.B. Teflon oder PPS, bestehen, und die zur Begrenzung der Pendelausschläge mit Anschlägen (6) zusammenwirken, die am Schwungring (2) anvulkanisiert sind.

3. Drehschwingungstilger nach Anspruch 2, dadurch gekennzeichnet, daß die Anschläge (6) als zusätzliche Distanzhalter ausgebildet sind und taschenartige Ausnehmungen aufweisen, in welche flache Paßkerne (7) einsetzbar sind.

4. Drehschwingungstilger nach einem der Ansprüche 1 bis 3, dadurch gekennzeichnet, daß der dunk den keramischen Werkstoff wärmeisolierende Teil (1") des Nabenringes im metallischen Teil (1') des Nabenringes über Lochungen, Nuten und dergleiche Ausnehmungen (9) verankert ist.

5. Drehschwingungstilger nach einem der Ansprüche 1 bis 4, dadurch gekennzeichnet, daß sein Nabenring (1, 1', 1") an einem mit der Kurbelwelle verbundenen Schwungrad befestigt ist.

## Claims

1. Rotational vibration damper, more especially for automotive vehicles, having a hub ring which can communicate with a shaft or disc, and having a rotating ring which is concentric relative to said hub ring and is resiliently coupled to the hub ring via at least three rubber webs, which are prevulcanised when offset by identical angles, characterised in that the hub ring (1"), or the portion (1') of the hub ring (1) on which the rubber webs (3) are prevulcanised, is formed from a ceramic material.

2. Rotational vibration damper according to claim 1, characterised in that resilient spacer members (5) are provided on the hub ring (1, 1', 1"), which spacer members are formed from material having a low coefficient of friction, e.g. Teflon or PPS, at least on the friction surface, and which spacer members co-operate with stop members (6) to define the amplitudes of pendulum swing, said stop members being prevulcanised on the rotating ring (2).

3. Rotational vibration damper according to claim 2, characterised in that the stop members (6) are configured as additional spacer members and have pocket-like recesses into which flat tight-fitting cores (7) are insertable.

4. Rotational vibration damper according to one of claims 1 to 3, characterised in that the component part (1") of the hub ring, which is heat-insulating because of the ceramic material, is secured in the metallic portion (1') of the hub ring via perforations, grooves and similar recesses (9).

5. Rotational vibration damper according to one of claims 1 to 4, characterised in that its hub ring (1, 1', 1") is mounted on a rotating wheel connected to the crankshaft.

## Revendications

1. Amortisseur de vibrations de torsion, notamment pour des véhicules comprenant un anneau de moyeu pouvant être accouplé à un arbre ou à un disque, et comprenant un anneau d'inertie concentrique par rapport à l'anneau de moyeu, anneau d'inertie qui est accouplé élastiquement à l'anneau de moyeu par l'intermédiaire d'au moins trois nervures en caoutchouc, vulcanisées et décalées suivant les mêmes angles,
caractérisé en ce que l'anneau de moyeu (1") ou la partie (1') de l'anneau de moyeu (1), sur lequel les nervures (3) en caoutchouc sont vulcanisées, se compose d'un matériau en céramique.

2. Amortisseur de vibrations de torsion selon la revendication 1, caractérisé en ce que, des entretoises (5) élastiques sont placées sur l'anneau de moyeu (1, 1', 1"), qui se composent, au moins au niveau de la surface de frottement, d'un matériau ayant un faible coefficient de frottement, comme par exemple du Téflon ou du sulfure de polyphénylène (PPS), et qui agissent en association avec les butées (6) pour limiter l'amplitude des oscillations, butées qui sont vulcanisées sur l'anneau d'inertie (2).

3. Amortisseur de vibrations de torsion selon la revendication 2, caractérisé en ce que les butées (6) sont constituées comme des entretoises supplémentaires et en ce qu'elles présentent des évidements en forme de poche dans lesquels de faux noyaux d'ajustage (7) peuvent être introduits.

4. Amortisseur de vibrations de torsion selon l'une quelconque des revendications 1 à 3, caractérisé en ce que la partie calorifuge (1"), grâce au matériau en céramique, de l'anneau de moyeu est ancrée dans la partie métallique (1') de l'anneau de moyeu par des trous, des rainures et autres évidements (9).

5. Amortisseur de vibrations de torsion selon l'une quelconque des revendications 1 à 4, caractérisé en ce que son anneau de moyeu (1, 1', 1") est fixé à un volant d'inertie relié au vilebrequin.
